# EUROPEAN PATENT SPECIFICATION

(11) **EP 3 705 442 B1**
(45) Date of publication and mention of the grant of the patent: **01.05.2024**
(21) Application number: 19161331.4
(22) Date of filing: 07.03.2019
(51) Int. Cl.: B66B 5/00, B66B 7/00, B66B 17/14

(54) **AN ELEVATOR CAR ENERGY STORAGE MOUNTING ARRANGEMENT AND A MAINTENANCE METHOD**
AUFZUGKABINENENERGIESPEICHERMONTAGEANORDNUNG UND WARTUNGSVERFAHREN
AGENCEMENT DE MONTAGE DE STOCKAGE D'ÉNERGIE DE CABINE D'ASCENSEUR ET PROCÉDÉ DE MAINTENANCE

(43) Date of publication of application: 09.09.2020
(73) Proprietor: KONE Corporation, 00330 Helsinki (FI)
(72) Inventor: Perunka, Pekka, 00330 Helsinki (FI); Puranen, Mikko, 00330 Helsinki (FI); Thomenius, Ville, 00330 Helsinki (FI); Öfversten, Janne, 00330 Helsinki (FI); Romo, Jari, 00330 Helsinki (FI)
(74) Representative: Papula Oy

(56) References cited:
- WO-A1-2017/140654
- JP-A- 2002 037 573
- JP-A- 2014 118 277
- US-A1- 2008 280 195
- US-A1- 2017 260 026

## Description

### BACKGROUND

Travelling cables are used in elevator systems to provide power for an elevator car travelling in an elevator shaft. Travelling cables become long and heavy especially in high-rise buildings. Travelling cables also are prone to uncontrolled swinging. These characteristics alone or in combination may cause elevator car balancing, downtime and reliability issues in buildings, and especially in high-rise buildings.

US 2017/260026 A1 discloses an elevator system that includes a hoistway and an elevator car suspended in the hoistway via a suspension member and drivable along the hoistway. The elevator car includes an elevator car panel and a battery pocket positioned in the elevator car panel. A battery is removably positioned in the battery pocket. The battery and the battery pocket are configured such that inspection, maintenance and/or repair of the battery is performed without entry into the hoistway of the elevator system.

JP 2014 118277 A discloses an arrangement in which an elevator car is equipped with a power storage device for supplying electric power to electric equipment mounted in the elevator car.

Therefore, alternative ways to provide power for the elevator car are needed. It would be beneficial to have a solution that would alleviate at least one of these drawbacks.

### SUMMARY

In elevators, and especially in high-rise elevators, traditional emergency batteries are not adequate as primary power sources for elevator cars travelling in elevator shafts. Power consumption of such elevator cars may be several kilowatts. The present disclosure provides a solution in which high-energy batteries, such as lithium-ion batteries, can be mounted in a slidably moving rack. In the solution, the rack is arranged between an elevator car bottom and its associated lower beam, attached to an elevator car sling.

According to a first aspect of the invention, there is provided an elevator car energy storage mounting arrangement comprising a lower beam configured to carry an elevator car. The elevator car energy storage mounting arrangement further comprises a rack configured to carry an energy storage and an energy storage mounted in the rack. The rack is slidably mounted between a bottom of the elevator car and the lower beam.

In an embodiment, the elevator car energy storage mounting arrangement further comprises attaching means configured to attach the rack to the lower beam, the attaching means enabling the rack to slide between the bottom of the elevator car and the lower beam.

In an embodiment, the elevator car energy storage mounting arrangement further comprises first adjusting means for adjusting a mounting position of the rack between the bottom of the elevator car and the lower beam.

In an embodiment, the rack is positioned symmetrically with respect of the centre of gravity of the elevator car energy storage mounting arrangement.

In an embodiment, the elevator car energy storage mounting arrangement further comprises second adjusting means for adjusting a mounting position of the energy storage in the rack.

According to a second aspect of the invention, there is provided a maintenance method for an elevator car energy storage. The method comprises unlocking a locking mechanism associated with a rack, the rack being configured to carry an energy storage and being slidably mounted between a bottom of an elevator car and a lower beam configured to carry an elevator car; pulling the rack to a landing floor for maintenance from a retracted position to an extracted position; performing a maintenance operation associated with the rack; pushing the rack back to the retracted position between the bottom of the elevator car and the lower beam; and locking the locking mechanism associated with the rack.

In an embodiment, performing the maintenance operation comprises mounting an energy storage in the rack.

In an embodiment, performing the maintenance operation comprises removing a previously installed energy storage from the rack; and mounting a new energy storage in the rack.

In an embodiment, the method further comprises driving the elevator car to the maintenance position of the energy storage, in which maintenance position the rack is exposed or exposable to the landing floor.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1A** illustrates an elevator car energy storage mounting arrangement according to an embodiment.
**FIG. 1B** illustrates a rack comprising an energy storage according to an embodiment.
**FIG. 1C** illustrates an overhead view of the rack comprising the energy source according to an embodiment.
**FIG. 1D** illustrates an elevator car energy storage mounting arrangement according to another embodiment.
**FIG. 2** illustrates a flow diagram of a maintenance method for an elevator car energy storage according to an embodiment.

### DETAILED DESCRIPTION

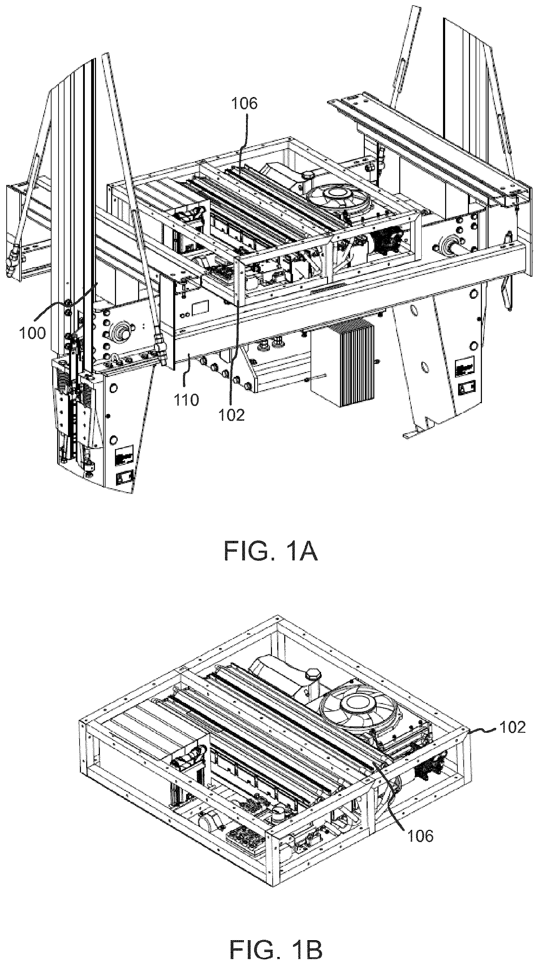

FIG. 1A illustrates an elevator car energy storage mounting arrangement according to an embodiment. The elevator car energy storage mounting arrangement comprises a rack 102 configured to carry an energy storage 106 and a lower beam 100 configured to carry an elevator car. The rack 102 is slidably mounted between a bottom of the elevator car and the lower beam 100. The rack 102 can be moved by sliding it, for example, along rails on top of a balancing beam 110. Instead or rails, any other solution that enables the sliding can be used.

The rack 102 may also comprise an energy storage 106. The energy storage 106 may refer, for example, to high-energy batteries, such as lithium-ion batteries.

When the energy storage 106 is used to provide all the needed power for various systems associated with the elevator car, there is no need to any more use the conventional travelling cables. This comes extremely useful in high-rise cases where the use of travelling cables is problematic. Further, depending on the size of the energy storage 106, it can be integrated to standard elevators only with small changes.

In one embodiment, the rack 102 may comprise the rails to slide the rack 102 with respect to the elevator car, an attaching mechanism for attaching the energy storage to the rack 102, an attaching mechanism for attaching the rack 102 to the lower beam 100, an attaching mechanism for attaching the rack 102 to the balancing beam 110.

The elevator car energy storage mounting arrangement or the rack 102 may further comprise attaching means that are configured to attach the rack 102 to the lower beam 100. The attaching means may also enable the rack 102 to slide between the bottom of the elevator car and the lower beam 100. When the rack 102 is attached or fixed to the lower beam 100, this makes it stable and prevents weight distribution to other components. In some embodiments, the elevator car energy storage mounting arrangement may comprise first adjusting means for adjusting a mounting position of the rack 102 between the bottom of the elevator car and the lower beam 100. This may be useful when it is necessary to consider an overall weight distribution or balance of the elevator car and equipment associated to it.

The illustrated elevator car energy storage mounting arrangement provides a solution that can be easily integrated to standard elevators with minimum changes to sling design. The illustrated elevator car energy storage mounting arrangement also provides a minimum impact to ride comfort because the energy storage 106 is only attached to the sling and insulated from the elevator car structure.

The elevator car energy storage mounting arrangement may further comprise second adjusting means for adjusting a mounting position of the energy storage 106 in the rack 102. In one example, the tack 102 may comprise multiple alternative attachment points (for example, multiple holes for screws or bolts) for the energy storage 106. The most appropriate one or ones may then be selected and used when mounting the energy storage 106 into the rack 102. By changing a position of the energy storage 106 in the rack 102, it may be possible to balance an unstable elevator car.

Further, the energy storage mounting arrangement may be provided with at least one sensor, such as a proximity sensor or a safety contact, which monitors the presence of the energy storage 106 at its mounting position.

FIG. 1B illustrates a rack 102 comprising an energy storage 106 according to an embodiment. The rack 102 comprises a supporting structure that is able to carry a weight of the energy storage 106. The energy storage 106 may refer, for example, to high-energy batteries, such as lithium-ion batteries. In addition to the energy storage 106, the rack 102 may comprise other modules and electrical components relating, for example, to cooling, cell balancing or voltage conversion.

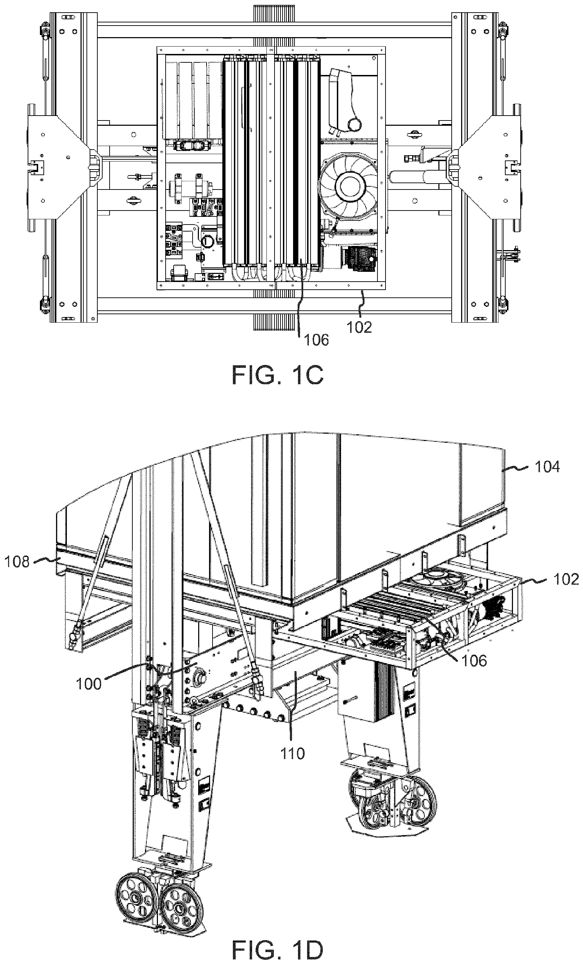

FIG. 1C illustrates an overhead view of the rack 102 comprising the energy source 106. As FIG. 1C illustrates, the placement of the rack 102 may be placed in the middle of the elevator car on top of the lower beam 100, resulting in a perfect center of gravity.

FIG. 1D illustrates an elevator car energy storage mounting arrangement according to another embodiment. The rack 102 is slidably mounted between the bottom 108 of the elevator car 104 and the lower beam 100. In the embodiment illustrated in FIG. 1D, the rack 102 has been slidably moved from a retracted position to a partly extracted position. As can be seen from FIG. 1D, the rack 102 can be used to install and remove the energy storage 106 by sliding it along rails on top of a balancing beam 110. This enables easy installation and maintenance access by sliding in/out rack 102 and the energy storage 106 from/to a landing floor.

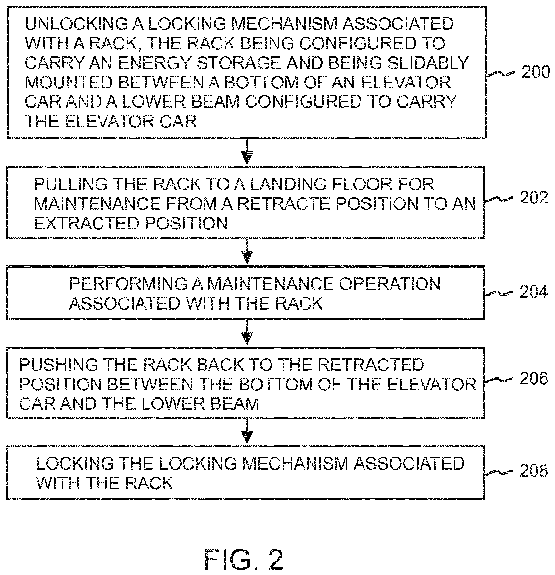

FIG. 2 illustrates a flow diagram of a maintenance method for an elevator car energy storage according to an embodiment.

At 200, a locking mechanism associated with a rack 102 is unlocked, the rack 102 being configured to carry an energy storage 106 and being slidably mounted between a bottom 108 of the elevator car 104 and the lower beam 100 configured to carry the elevator car 104.

At 202 the rack 102 is pulled to a landing floor for maintenance from a retracted position to an extracted position. Before pulling the rack 102, the elevator car may have been driven to the maintenance position of the energy storage, in which maintenance position the rack is exposed or exposable to the landing floor.

At 204 a maintenance operation associated with the rack 102 is performed. In some embodiments, the maintenance operation comprises mounting an energy storage 106 in the rack 102. In some embodiments, the maintenance operation comprises removing a previously installed energy storage from the rack 102 and mounting a new energy storage 106 in the rack 102.

At 206 the rack 102 is pushed back to the retracted position between the bottom 108 of the elevator car 104 and the lower beam 100.

At 208 the locking mechanism associated with the rack 102 is locked.

The illustrated method provides a solution in which maintainable components of the energy storage 106 can be accessed by maintenance personnel by pulling the rack 102 with the energy storage 106 to a landing floor from a landing door opening. This significantly improves the accessibility to the energy storage 106.

In view of the foregoing description it will be evident to a person skilled in the art that various modifications may be made without departing from the scope of the claims.

## Claims

1. An elevator car energy storage mounting arrangement comprising:
a lower beam (100) configured to carry an elevator car (104);
a rack (102) configured to carry an energy storage (106); and
an energy storage (106) mounted in the rack (102) ;
and further **characterized in that** the rack (102) is slidably mounted between a bottom (108) of the elevator car (104) and the lower beam (100).

2. An elevator car energy storage mounting arrangement of claim 1, further comprising attaching means configured to attach the rack (102) to the lower beam (100), the attaching means enabling the rack (102) to slide between the bottom (108) of the elevator car (104) and the lower beam (100).

3. An elevator car energy storage mounting arrangement of any of claims 1 - 2, further comprising first adjusting means for adjusting a mounting position of the rack (102) between the bottom (108) of the elevator car (104) and the lower beam (100).

4. An elevator car energy storage mounting arrangement of any of claims 1 - 3, wherein the rack (102) is positioned symmetrically with respect of the centre of gravity of the elevator car energy storage mounting arrangement.

5. An elevator car energy storage mounting arrangement of any of claims 1 - 4, further comprising second adjusting means for adjusting a mounting position of the energy storage (106) in the rack (102).

6. A maintenance method for an elevator car energy storage, **characterized in that** the method comprises:
unlocking (200) a locking mechanism associated with a rack (102), the rack (102) being configured to carry an energy storage (106) and being slidably mounted between a bottom (108) of an elevator car (104) and a lower beam (100) configured to carry the elevator car;
pulling (202) the rack (102) to a landing floor for maintenance from a retracted position to an extracted position;
performing (204) a maintenance operation associated with the rack (102);
pushing (206) the rack (102) back to the retracted position between the bottom (108) of the elevator car (104) and the lower beam (100); and
locking (208) the locking mechanism associated with the rack (102).

7. A method according to claim 6, wherein performing the maintenance operation comprises:
mounting an energy storage (106) in the rack (102) .

8. A method according to claim 6, wherein performing the maintenance operation comprises:
removing a previously installed energy storage from the rack (102); and
mounting a new energy storage (106) in the rack (102) .

9. A method according to any of claims 6 - 8, further comprising driving the elevator car to the maintenance position of the energy storage, in which maintenance position the rack is exposed or exposable to the landing floor.

## Patentansprüche

1. Montageanordnung für einen Aufzugkabinenenergiespeicher, umfassend:
einen unteren Träger (100), der konfiguriert ist, um eine Aufzugkabine (104) zu tragen;
ein Gestell (102), das konfiguriert ist, um einen Energiespeicher (106) zu tragen; und
einen Energiespeicher (106), der in dem Gestell (102) montiert ist;
und ferner **dadurch gekennzeichnet, dass** das Gestell (102) zwischen einem Boden (108) der Aufzugkabine (104) und dem unteren Träger (100) verschiebbar montiert ist.

2. Montageanordnung für einen Aufzugkabinenenergiespeicher nach Anspruch 1, ferner umfassend ein Befestigungsmittel, das konfiguriert ist, um das Gestell (102) an dem unteren Träger (100) zu befestigen, wobei das Befestigungsmittel es ermöglicht, dass das Gestell (102) zwischen dem Boden (108) der Aufzugkabine (104) und dem unteren Träger (100) gleiten kann.

3. Montageanordnung für einen Aufzugkabinenenergiespeicher nach einem der Ansprüche 1 bis 2, ferner umfassend ein erstes Einstellmittel zum Einstellen einer Montageposition des Gestells (102) zwischen dem Boden (108) der Aufzugkabine (104) und dem unteren Träger (100).

4. Montageanordnung für einen Aufzugkabinenenergiespeicher nach einem der Ansprüche 1-3, wobei das Gestell (102) in Bezug auf den Schwerpunkt der Montageanordnung für einen Aufzugkabinenenergiespeicher symmetrisch positioniert ist.

5. Montageanordnung für einen Aufzugkabinenenergiespeicher nach einem der Ansprüche 1 bis 4, ferner umfassend ein zweites Einstellmittel zum Einstellen einer Montageposition des Energiespeichers (106) in dem Gestell (102).

6. Wartungsverfahren für eine Montageanordnung für einen Aufzugkabinenenergiespeicher, **dadurch gekennzeichnet, dass** das Verfahren umfasst:
Entriegeln (200) eines Verriegelungsmechanismus, der einem Gestell (102) zugeordnet ist, wobei das Gestell (102) konfiguriert ist, um einen Energiespeicher (106) zu tragen und zwischen einem Boden (108) einer Aufzugkabine (104) und einem unteren Träger (100), der konfiguriert ist, um die Aufzugkabine zu tragen, gleitend montiert zu werden;
Ziehen (202) des Gestells (102) zu einem Stockwerk zur Wartung aus einer eingefahrenen Position in eine ausgefahrene Position;
Durchführen (204) eines Wartungsvorgangs in Verbindung mit dem Gestell (102);
Zurückschieben (206) des Gestells (102) in die eingefahrene Position zwischen dem Boden (108) der Aufzugkabine (104) und dem unteren Träger (100); und
Verriegeln (208) des Verriegelungsmechanismus, der dem Gestell (102) zugeordnet ist.

7. Verfahren nach Anspruch 6, wobei das Durchführen des Wartungsvorgangs umfasst: Montieren eines Energiespeichers (106) in dem Gestell (102).

8. Verfahren nach Anspruch 6, wobei das Durchführen des Wartungsvorgangs umfasst:
Entfernen eines zuvor installierten Energiespeichers aus dem Gestell (102); und
Montieren eines neuen Energiespeichers (106) in dem Gestell (102).

9. Verfahren nach einem der Ansprüche 6-8, ferner umfassend Fahren der Aufzugkabine zu der Wartungsposition des Energiespeichers, wobei in der Wartungsposition das Gestell dem Fußboden ausgesetzt oder aussetzbar ist.

## Revendications

1. Agencement de montage d'accumulateur d'énergie de cabine d'ascenseur comprenant :
une poutre inférieure (100) configurée pour porter une cabine d'ascenseur (104) ;
un support (102) configuré pour porter un accumulateur d'énergie (106) ; et
un accumulateur d'énergie (106) monté dans le support (102) ;
et **caractérisé en outre en ce que**
le support (102) est monté de manière coulissante entre un fond (108) de la cabine d'ascenseur (104) et la poutre inférieure (100).

2. Agencement de montage d'accumulateur d'énergie de cabine d'ascenseur de la revendication 1, comprenant en outre des moyens de fixation configurés pour fixer le support (102) à la poutre inférieure (100), les moyens de fixation permettant au support (102) de coulisser entre le fond (108) de la cabine d'ascenseur (104) et la poutre inférieure (100).

3. Agencement de montage d'accumulateur d'énergie de cabine d'ascenseur de l'une des revendications 1 et 2, comprenant en outre des premier moyens de réglage pour régler une position de montage du support (102) entre le fond (108) de la cabine d'ascenseur (104) et la poutre inférieure (100).

4. Agencement de montage d'accumulateur d'énergie de cabine d'ascenseur de l'une des revendications 1 à 3, dans lequel le support (102) est positionné de manière symétrique par rapport au centre de gravité de l'agencement de montage d'accumulateur d'énergie de cabine d'ascenseur.

5. Agencement de montage d'accumulateur d'énergie de cabine d'ascenseur de l'une des revendications 1 à 4, comprenant en outre des second moyens de réglage pour régler une position de montage de l'accumulateur d'énergie (106) dans le support (102).

6. Procédé d'entretien pour un accumulateur d'énergie de cabine d'ascenseur, **caractérisé en ce que** le procédé comprend :
le déverrouillage (200) d'un mécanisme de verrouillage associé à un support (102), le support (102) étant configuré pour porter un accumulateur d'énergie (106) et étant monté de manière coulissante entre un fond (108) d'une cabine d'ascenseur (104) et une poutre inférieure (100) configurée pour porter la cabine d'ascenseur ;
la traction (202) du support (102) vers un palier en vue d'un entretien d'une position rétractée à une position extraite ;
la réalisation (204) d'une opération d'entretien associée au support (102) ;
la poussée (206) du support (102) vers la position rétractée entre le fond (108) de la cabine d'ascenseur (104) et la poutre inférieure (100) ; et
le verrouillage (208) du mécanisme de verrouillage associé au support (102).

7. Procédé selon la revendication 6, dans lequel la réalisation de l'opération d'entretien comprend :
le montage d'un accumulateur d'énergie (106) dans le support (102).

8. Procédé selon la revendication 6, dans lequel la réalisation de l'opération d'entretien comprend :
le retrait d'un accumulateur d'énergie installé préalablement du support (102) ; et
le montage d'un nouvel accumulateur d'énergie (106) dans le support (102).

9. Procédé selon l'une des revendications 6 à 8, comprenant en outre l'entraînement de la cabine d'ascenseur vers la position d'entretien de l'accumulateur d'énergie dans laquelle le support est exposé ou peut être exposé au palier.
